# EUROPÄISCHE PATENTSCHRIFT

(11) **EP 2 054 657 B1**
(45) Veröffentlichungstag und Bekanntmachung des Hinweises auf die Patenterteilung: **11.08.2010**
(21) Anmeldenummer: 07801774.6
(22) Anmeldetag: 20.08.2007
(51) Int. Cl.: F16K 31/56, F16K 51/02

(54) **SCHNELLSCHLUSSVENTIL**
QUICK-ACTION VALVE
SOUPAPE A FERMETURE RAPIDE

(30) Priorität: 22.08.2006 DE 102006039289
(43) Veröffentlichungstag der Anmeldung: 06.05.2009
(73) Patentinhaber: Deutsches Elektronen-Synchrotron DESY, 22607 Hamburg (DE)
(72) Erfinder: HAHN, Ulrich, 21614 Buxtehude (DE); PETERS, Hans Bernhard, 22869 Schenefeld (DE); MÜLLER, Sarah, 38102 Braunschweig (DE)
(74) Vertreter: UEXKÜLL & STOLBERG
(86) Internationale Anmeldenummer: PCT/EP2007/007334
(87) Internationale Veröffentlichungsnummer: WO 2008/022762

(56) Entgegenhaltungen:
- DE-A1- 2 748 802
- DE-A1- 2 951 387
- DE-A1- 3 131 178

## Beschreibung

Die vorliegende Erfindung betrifft ein Schnellschlussventil mit einer Basis, mit einem Ventilsitz, mit einem Ventilteller und mit einem Vorspannelement, wobei der Ventilteller zwischen einer geöffneten Stellung und einer geschlossenen Stellung beweglich ist, wobei der Ventilteller in der geschlossenen Stellung an dem Ventilsitz anliegt und wobei das Vorspannelement den Ventilteller in die geschlossene Stellung vorspannt.

In großen Vakuumsystemen wie beispielsweise Beschleunigeranlagen ist es häufig erforderlich, bestimmte Abschnitte davor zu schützen, dass eine Druckwelle, die durch einen Lufteinbruch verursacht wird, in diese Abschnitte gelangt. So kann es beispielsweise erforderlich sein, einen Beschleunigerring davor zu schützen, dass eine Druckwelle, die durch einen Lufteinbruch aufgrund einer Fehlbedienung oder eines Risses in einem Fenster oder einem Faltenbalg an einem Messplatz verursacht wird, in den Bereich des Beschleunigerringes selbst gelangt und damit längere Betriebsunterbrechungen der gesamten Anlage hervorruft.

Zu diesem Zweck werden so genannte Schnellschlussventile eingesetzt, die in der Lage sind, außerordentlich schnell einen Ventilsitz zu verschließen. Wegen starker Strahlungsbelastung in den Beschleunigertunneln werden vorzugsweise metallisch dichtende Ventile verwendet, wobei es ferner üblich ist, eine Kombination eines nicht völlig dichtenden Schnellschlussventils (Leckrate < 5 mbar l/sec) mit einem langsam schließenden metallisch dichtenden Ultrahochvakuum Ventil (Leckrate < 10⁻¹⁰ mbar l/sec) zu verwenden. Bei der Ausgestaltung eines solchen Schnellschlussventils ist zu berücksichtigen, dass sich eine Druckwelle in einem Vakuumsystem mit etwa der dreifachen Schallgeschwindigkeit (~1000m/s) ausbreitet. Damit ergibt sich, dass die Zeit, die das Schnellschlussventil benötigt, um zu schließen, den Abstand festlegt, den das Schnellschlussventil mindestens von dem Bereich haben muss, in dem eine Druckwelle ausgelöst und detektiert werden kann, um sicher zu stellen, dass der hinter dem Schnellschlussventil liegende, abzuschirmende Bereich effektiv vor einer Beschädigung geschützt wird. Für den Fall einer Schließzeit von etwa 10 ms ergibt sich somit, dass dieser Abstand rund 10 m betragen muss. Will man diesen Abstand verringern, müssen die Schließzeiten reduziert werden.

Aus der DE 29 51 387 C2, von der die vorliegende Erfindung ausgeht, ist ein Schnellschlussventil bekannt, dass einen in einem Gehäuse angeordneten Ventilsitz aufweist, wobei der Ventilsitz mit dem zu schützenden Bereich eines Vakuumsystems verbunden ist. Der Ventilsitz kann durch einen Ventilteller verschlossen werden, der schwenkbar innerhalb des Gehäuses angebracht ist und zwischen einer geschlossenen Stellung, in der der Ventilteller an dem Ventilsitz anliegt, und einer geöffneten Stellung verstellbar ist. Dabei wird der Ventilteller von einem Vorspannelement, in diesem Fall eine Schraubenfeder, beim Auslösen des Ventils in die geschlossene Stellung beschleunigt, wobei diese Zugfeder ebenfalls im Gehäuse und damit auf der vakuumseitigen Seite einer Basis angebracht ist.

Nachteilig an diesem Schnellschlussventil gemäß dem Stand der Technik ist, dass eine aufwendige Schwenklagerung für den Ventilteller innerhalb des Gehäuses erforderlich ist, um eine kurze Schließzeit sicherzustellen. Insbesondere ergibt sich das Problem, dass die Schwenklagerung für den Ventilteller vakuumseitig angebracht werden muss und daher eine Schmierung nicht möglich ist. Auf der anderen Seite ist es jedoch notwendig, dass der Ventilteller exakt innerhalb des Gehäuses geführt ist, damit er bei der Schließbewegung den Ventilsitz zuverlässig dichtend abschließt.

Aus der DE 31 31 178 A1 ist darüber hinaus ein Vakuumventil mit einem schwenkbar angebrachten Ventilteller bekannt, bei dem der Ventilteller über eine Gestängeanordnung durch Betätigen einer Antriebsstange mittels eines Pneumatikzylinders aus der geöffneten Stellung in den geschlossene Stellung bewegt wird.

Ausgehend vom Stand der Technik ist es daher die Aufgabe der vorliegenden Erfindung, ein Schnellschlussventil bereitzustellen, das vakuumseitig keine aufwendige bewegliche Lagerung des Ventiltellers erfordert.

Erfindungsgemäß wird diese Aufgabe dadurch gelöst, dass eine Antriebsstange vorgesehen ist, an deren Ende der Ventilteller schwenkbar angebracht ist, dass die Antriebsstange in deren axialer Richtung in der Basis verschiebbar und mit dem Vorspannelement verbunden ist und dass ein elastisches Lagerungselement vorgesehen ist, das den Ventilteller mit der Basis verbindet.

Bei dem erfindungsgemäßen Schnellschlussventil ist keine aufwendige Lagerung des Ventiltellers innerhalb des Vakuums erforderlich, da lediglich eine lineare Bewegung der Antriebsstange notwendig ist, um den Ventilteller von der geöffneten in die geschlossene Stellung zu überführen, wobei das elastische Lagerungselement sicherstellt, dass der Ventilteller in der richtigen Ausrichtung, d.h. parallel zu dem Ventilsitz, an dem Ventilsitz zur Anlage kommt.

Dabei wird durch die Schwenkbewegung, die der Ventilteller beim Übergang von der geöffneten in die geschlossene Stellung ausführt, der Hub, um den die Antriebsstange verlagert werden muss, im Vergleich zu einem Ventil, das durch eine reine Verschiebebewegung geschlossen wird, reduziert, sodass sich insgesamt eine geringere Baugröße des Schnellschlussventils ergibt.

Bei der erfindungsgemäßen Anordnung wird der vakuumseitige Aufbau des Schnellschlussventils gemäß der vorliegenden Erfindung im Vergleich zum Stand der Technik erheblich vereinfacht, was zum einen mit dem Vorteil verbunden ist, dass auf konstruktiv einfache Weise ein Ventil mit einer Schließzeit von weniger als 10 ms realisiert werden kann. Zum anderen wird eine Verbesserung der vakuumgerechten Konstruktion erreicht, in dem das erfindungsgemäße Schnellschlussventil weniger Bereiche aufweist, die einen geringen Pumpquerschnitt haben und somit vakuumtechnisch problematisch sind.

In einer bevorzugten Ausführungsform kann das elastische Lagerungselement als Blattfeder ausgebildet sein; es ist aber auch denkbar, dass andere Ausgestaltungen für das Lagerungselement verwendet werden. Dabei muss das elastische Lagerungselement eine Schwenkbewegung des Ventiltellers ermöglichen, wobei das Lagerungselement zusammen mit der Antriebsstange in der geschlossenen Stellung die Position des Ventiltellers relativ zu dem Ventilsitz festlegt.

In bevorzugter Weise weist die Antriebsstange ein Gelenk auf, sodass es bei der Schwenkbewegung des Ventiltellers und der damit verbundenen Bewegung des Ventiltellers quer zur Erstrekkungsrichtung der Antriebsstange nicht zu Spannungen in der Antriebsstange kommt, die die Schließbewegung verlangsamen könnten.

Weiterhin kann ein Faltenbalg an der Basis vorgesehen sein, wobei der Faltenbalg sich in axialer Richtung der Führungstange erstreckt und die Antriebsstange an dem freien Ende des Faltenbalgs befestigt ist. Auf diese Weise kann die Führungsstange durch die Basis hindurchgeführt werden, ohne dass es einer komplizierten Dichtungsanordnung bedürfte, die eine axiale Bewegung der Antriebsstange ermöglicht, wobei trotzdem eine hohe Dichtigkeit gewahrt bleibt. Außerdem ermöglicht der Faltenbalg auch eine leichte Bewegung der Antriebsstange quer zu deren Erstreckungsrichtung, die durch die Schwenkbewegung des Ventiltellers beim Schließen erforderlich sein kann.

In weiter bevorzugter Weise ist das Vorspannelement auf der von dem Ventilteller abgewandten Seite der Basis vorgesehen, sodass dieses im Unterschied zum Stand der Technik nicht mehr vakuumseitig angeordnet werden muss und sich die Anzahl der vakuumseitig angeordneten Teile des erfindungsgemäßen Schnellschlussventils weiter reduziert.

Um das Schnellschlussventil ferngesteuert betätigen zu können, ist es außerdem bevorzugt, eine Hebeeinrichtung vorzusehen, die mit dem vom Ventilteller abgewandten Ende der Antriebsstange verbunden ist. Dabei kann die Hebeeinrichtung in besonders bevorzugter Weise als Druckluftzylinder ausgestaltet sein.

Hierbei ist es weiter bevorzugt, wenn die Antriebsstange in deren axialer Richtung verschiebbar gegenüber der Hebeeinrichtung ist und der Verschiebehub so bemessen ist, dass die Antriebsstange den Ventilteller von der geöffneten Stellung in die geschlossene Stellung bewegen kann, ohne dass die Hebeeinrichtung bewegt werden muss. Dies hat den Vorteil, dass im Falle eines Auslösens des Schnellschlussventils nicht auch ein Teil der Hebeeinrichtung mit bewegt werden muss, was die Schließzeit aufgrund der größeren zu bewegenden Masse und der Reibung in der Hebeeinrichtung (Druckluftzylinder) verlängern würde.

Schließlich kann die Antriebsstange einen Verriegelungsvorsprung auf der dem Vakuum abgewandten Seite der Basis aufweisen, und es kann eine bewegliche Verriegelungsklinke vorgesehen sein, wobei die bewegliche Verriegelungsklinke derart angeordnet ist, dass sie mit dem Verriegelungsvorsprung in Eingriff gelangen kann, wenn der Ventilteller in der geöffneten Stellung ist. Auf diese Weise kann durch Betätigen der beweglichen Verriegelungsklinke die Antriebsstange gelöst werden, sodass sie durch das Vorspannelement in die geschlossene Stellung gedrückt wird und der Ventilsitz durch den Ventilteller geschlossen wird.

Im Folgenden wird die vorliegende Erfindung anhand einer Zeichnung erläutert, die lediglich ein bevorzugtes Ausführungsbeispiel darstellt, wobei
- Fig. 1: eine teilweise geschnittene Seitenansicht des Ausfüh- rungsbeispiels eines erfindungsgemäßen Schnell- schlussventils ist,
- Fig. 2: den Ventilteller, die Führungstange und die Basis des Ausführungsbeispiels aus Fig. 1 in vergrößerter Dar- stellung zeigt,
- Fig. 3: den Bereich der Führungsstange aus Fig. 1 in vergrö- ßerter Darstellung zeigt und
- Fig. 4: ein Schnitt entlang der Linie IV-IV aus Figur 1 ist.

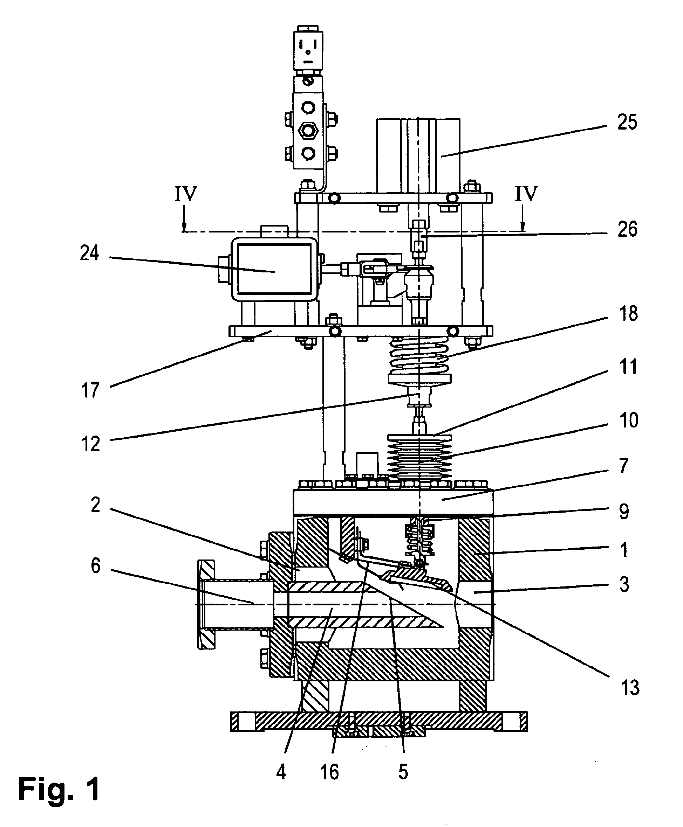

Wie in Fig. 1 dargestellt, weist das bevorzugte Ausführungsbeispiel eines erfindungsgemäßen Schnellschlussventils ein Gehäuse 1 auf, das eine erste Öffnung 2 und eine dazu gegenüberliegend angeordnete zweite Öffnung 3 aufweist. In die erste Öffnung 2 ist ein Ventilsitz 4 eingesetzt, dessen Dichtfläche 5 geneigt zur Achse 6 des Ventilsitzes 4 angeordnet ist.

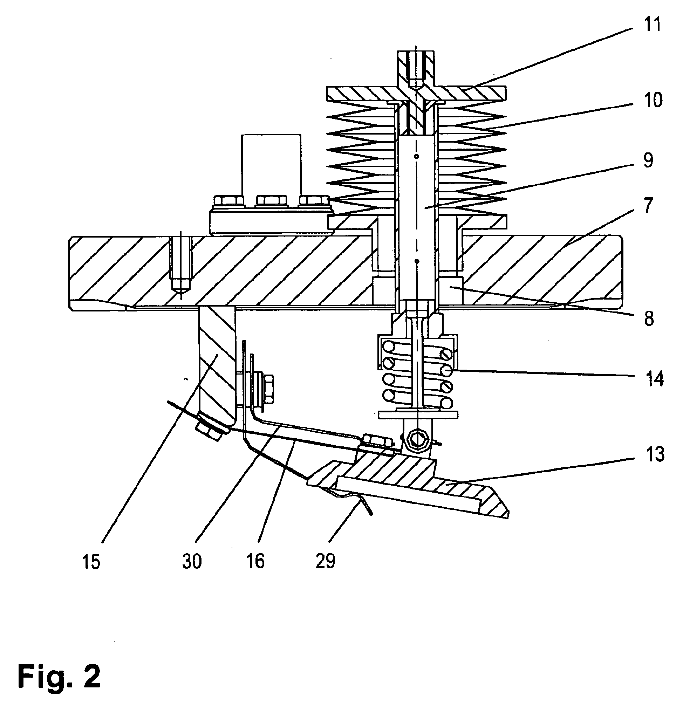

An der Oberseite des Gehäuses 1 ist eine in diesem Ausführungsbeispiel als Flansch ausgebildete Basis 7 lösbar angebracht. In der Basis 7 ist eine Öffnung 8 vorgesehen (siehe Fig. 2), durch die eine Antriebsstange 9 verläuft. An der Basis 7 ist ein Faltenbalg 10 befestigt, der sich in axialer Richtung der Antriebsstange 9 erstreckt und dessen von der Basis 7 abgewandtes freies Ende 11 mit der Antriebsstange 9 verbunden ist, sodass die Antriebsstange 9 in deren axialer Richtung in der Basis 7 verschiebbar ist. Durch den Faltenbalg 10 entfällt die Notwendigkeit für eine komplizierte Durchführung, die einerseits eine axiale und angulare Bewegung der Antriebsstange 9 ermöglichen und andererseits eine hohe Dichtigkeit gewährleisten müsste. Außerdem ermöglicht der Faltenbalg 10 eine Bewegung der Antriebsstange 9 quer zu deren Erstreckungsrichtung. Außerdem weist die Antriebsstange 9 auf der dem Vakuum abgewandten Seite des freien Endes 11 des Faltenbalgs 10 ein Gelenk 12 auf.

An dem vakuumseitigen Ende der Antriebsstange 9 ist ein Ventilteller 13 schwenkbar angebracht, wobei eine Dämpfungsfeder 14 zwischen dem Ventilteller 13 und der Antriebsstange 9 vorgesehen ist. Des Weiteren ist an der Basis 7 eine Halterung 15 vorgesehen, und eine Blattfeder 16 verbindet die Halterung 15 mit dem Ventilteller 13, wobei die Blattfeder 16 ein elastisches Lagerungselement bildet.

Da die Antriebsstange 9 in deren axialer Richtung in der Basis 7 verschiebbar ist, kann der Ventilteller 13 zwischen einer geöffneten Stellung, die in den Fig. 1 und 2 dargestellt ist, und einer geschlossenen Stellung, in der der Ventilteller 13 an dem Ventilsitz 4 an der Dichtfläche 5 anliegt, bewegt werden. Dabei stellt die Blattfeder 16, die das elastische Lagerungselement bildet, sicher, dass der Ventilteller 13 möglichst schnell und in der richtigen Orientierung zu der Dichtfläche 5 an dem Ventilsitz 4 anliegt.

Oberhalb der Basis 7 ist eine Befestigungsplatte 17 angebracht, an der sich mit einem Ende ein als Druckfeder 18 ausgebildetes Vorspannelement abstützt. Das freie Ende der Druckfeder 18 drückt wiederum gegen die Antriebsstange 9, sodass in der geöffneten Stellung die Antriebsstange 9 und damit der Ventilteller 13 in Richtung der geschlossenen Stellung vorgespannt sind.

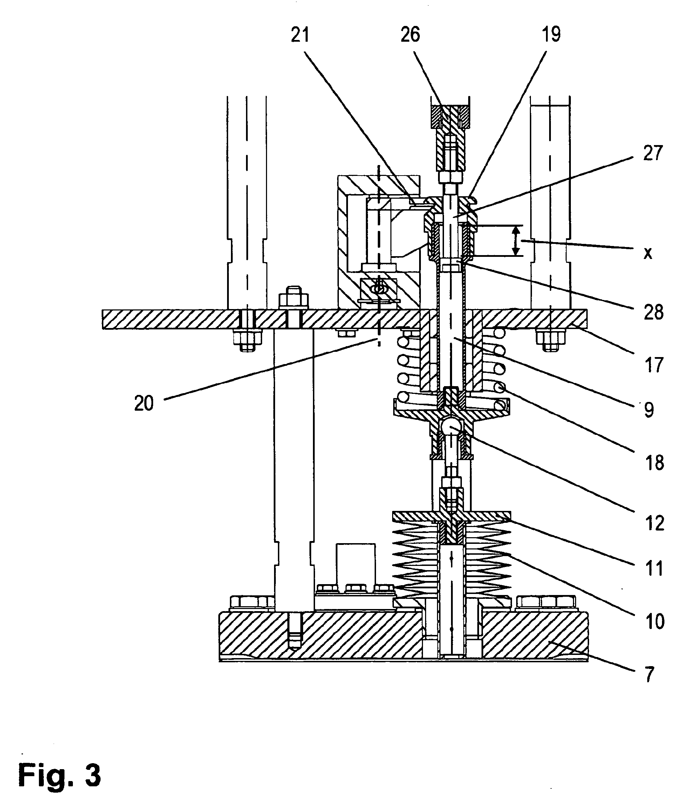

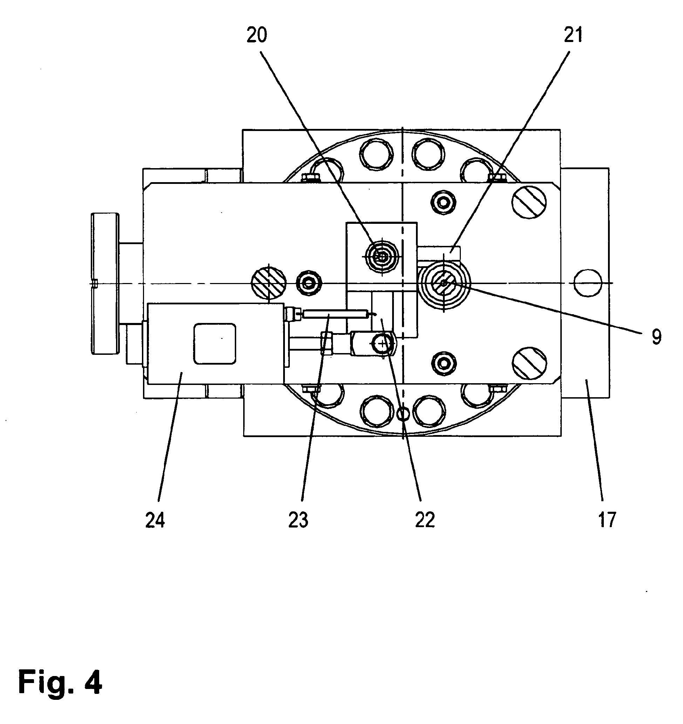

Wie in Fig. 3 ebenfalls gezeigt, weist das von dem Ventilteller 13 abgewandte Ende der Antriebsstange 9 einen Verriegelungsvorsprung 19 auf, in den eine um eine parallel zur Antriebsstange 9 verlaufende Achse 20 schwenkbare Verriegelungsklinke 21 eingreifen kann (siehe Fig. 4). Die Verriegelungsklinke 21 kann über einen Hebelarm 22 und eine Zugfeder 23 in Eingriff und mit einem Elektrohubzylinder 24 mit dem Verriegelungsvorsprung 19 außer Eingriff gebracht werden. Dabei ist der Verriegelungsvorsprung 19 so in Bezug auf die Antriebsstange 9 angeordnet, dass er mit der Verriegelungsklinke 21 in Eingriff gelangen kann, wenn die Antriebsstange 9 und damit der Ventilteller 13 in der geöffneten Stellung sind.

Wiederum oberhalb der Befestigungsplatte 17 ist eine als Druckluftzylinder 25 ausgebildete Hebeeinrichtung vorgesehen, wobei die Kolbenstange 26 des Druckluftzylinders 25 mit dem von dem Ventilteller 13 abgewandten Ende der Antriebsstange 9 verbunden ist. Die Verbindung zwischen der Kolbenstange 26 einerseits und der Antriebsstange 9 andererseits ist dabei so ausgestaltet, dass die Antriebsstange 9 in deren axialer Richtung verschiebbar gegenüber dem Druckluftzylinder 25 ist. Dabei ist der Verschiebehub x (siehe Fig. 3) so bemessen, dass die Führungstange 9 den Ventilteller 13 von der geöffneten Stellung in die geschlossene Stellung bewegen kann, ohne dass die Kolbenstange 26 und damit Teile des Druckluftzylinders 25 bewegt werden müssen.

Wie Fig. 3 zu entnehmen ist, ist dazu in dem Ende der Führungstange 9 ein Rückholbolzen 27 vorgesehen, der in das freie Ende der Kolbenstange 26 eingeschraubt ist. Dabei hat der Kopf 28 des Rückholbolzens 27 von dem Ende der Antriebsstange 9 den Abstand x, wenn sich diese zusammen mit dem Ventilteller 13 in der geöffneten Stellung befindet und die Kolbenstange 26 ausgefahren ist, wie dies in Fig. 3 dargestellt ist. Wenn die Verriegelungsklinke 21 von dem Verriegelungsvorsprung 19 gelöst wird, kann sich die Führungstange 9 (siehe Fig. 3) nach unten bewegen und den Ventilteller 13 in die geschlossene Stellung bringen, ohne dass sich die Kolbenstange 26 bewegen muss, da zwischen dem Kopf 28 und dem Ende der Antriebsstange 9 ein entsprechender Verschiebehub x vorgesehen ist.

Schließlich sind an dem Ventilteller 13 zwei Umschaltkontakte 29, 30 vorgesehen (siehe Fig. 2), über die festgestellt werden kann, ob sich der Ventilteller 13 in der geöffneten oder der geschlossen Stellung befindet.

Im Folgenden wird die Funktionsweise des Ausführungsbeispiels eines erfindungsgemäßen Schnellschlussventils beschrieben, wobei von der in Fig. 1 und 2 dargestellten geöffneten Stellung ausgegangen wird. Dabei ist die Verriegelungsklinke 21 in Eingriff mit dem Verriegelungsvorsprung 19 und die Kolbenstange 26 des Druckluftzylinders 25 befindet sich in der ausgefahrenen Stellung, sodass zwischen dem Kopf 28 des Rückholbolzens 27 und dem Ende der Antriebsstange 9 der Verschiebehub x gegeben ist.

In dem Fall, dass ein Lufteinbruch in dem Vakuumsystem festgestellt wird, das sich an die Öffnung 3 anschließt, wird der Elektrohubzylinder 24 ausgelöst und die Verriegelungsklinke 21 schwenkt um die Achse 20 gegen den Uhrzeigersinn (siehe Fig. 4). Dadurch wird die Führungstange 9 freigegeben und schnellt auf Grund der Vorspannung durch die Druckfeder 18 nach unten.

Bei dieser Bewegung von der geöffneten Stellung des Ventiltellers 13 in die geschlossene Stellung sorgt die Blattfeder 16 dafür, dass der Ventilteller 13 beim Auftreffen auf die Dichtfläche 5 des Ventilsitzes 4 die richtige Orientierung zu der Dichtfläche 5 des Ventilsitzes 4 hat.

Auf der anderen Seite wird durch die Verwendung der Blattfeder 16 vermieden, dass weitere Gelenkelemente wie z.B. Drehlager im Inneren des Gehäuses 1 auf der dem Vakuum zugewandten Seite der Basis 7 angeordnet sein müssen. Solche Gelenke würden dazu führen, dass in dem Gehäuse 1 vergleichsweise schlecht ein hinreichend gutes Vakuum erzeugt werden kann, da Gelenkelemente zwingend Bereiche mit schlechtem Pumpquerschnitt und einer Schmierung der Lagerflächen aufweisen. Des Weiteren ist bei Gelenkelementen fraglich, ob diese auch nach langen Standzeiten noch hinreichend leicht zu bewegen sind, um kurze Schließzeiten sicherzustellen.

Wenn der Ventilteller 13 an der Dichtfläche 5 zur Anlage kommt, sorgt die Dämpfungsfeder 14 zwischen Ventilteller 13 und Antriebsstange 9 dafür, dass der Aufschlag gedämpft und ein Prellen des Ventiltellers 13 vermieden wird. Das Gelenk 12 in der Antriebsstange 9 ermöglicht ein Knicken der Antriebsstange 9 und damit eine Freigabe der Quertranslation des Antriebpunktes an dem schwenkbar gelagerten Ventilteller 13.

In der geschlossenen Stellung des Ventiltellers 13 wird nun verhindert, dass sich eine Druckwelle von der Öffnung 3 zur Öffnung des Ventilsitzes 4 ausbreiten kann.

Um anschließend das Ventil wieder zu öffnen, wird der Druckluftzylinder 25 betätigt, sodass sich die Kolbenstange 26 nach oben bewegt. Sobald der Kopf 28 des Rückholbolzens 27 an dem Ende der Antriebsstange 9 anliegt, wird dadurch die Antriebsstange 9 ebenfalls nach oben bewegt, bis die Verriegelungsklinke 21 mit dem Verriegelungsvorsprung 19 in Eingriff gelangt. Anschließend wird die Kolbenstange 26 wieder abgesenkt, sodass wieder der Verschiebehub x zwischen dem Kopf 28 des Rückholbolzens 27 und dem Ende der Antriebsstange 9 gegeben ist.

Das erfindungsgemäße Schnellschlussventil ermöglicht Schließzeiten von weniger als 10 ms, was eine Verbesserung gegenüber dem Stand der Technik darstellt. Des Weiteren ist vorteilhaft, dass das erfindungsgemäße Schnellschlussventil weniger Bereiche aufweist, die einen geringen Pumpquerschnitt haben und somit vakuumtechnisch problematisch sind.

Schließlich ermöglicht der erfindungsgemäße Aufbau, bei dem die Basis 7 als Flansch ausgebildet ist und bei dem alle sich bewegenden Teile an der Basis 7 angebracht sind, eine einfache Demontage und Wartung.

## Patentansprüche

1. Schnellschlussventil mit einer Basis (7),
mit einem Ventilsitz (4),
mit einem Ventilteller (13) und
mit einem Vorspannelement (18),
wobei der Ventilteller (13) zwischen einer geöffneten Stellung und einer geschlossenen Stellung beweglich ist,
wobei der Ventilteller (13) in der geschlossenen Stellung an dem Ventilsitz (4) anliegt,
wobei das Vorspannelement (18) den Ventilteller (13) in die geschlossene Stellung vorspannt, und
wobei eine Antriebsstange (9) vorgesehen ist, an deren Ende der Ventilteller (13) schwenkbar angebracht ist,
**dadurch gekennzeichnet, dass** die Antriebsstange (9) in deren axialer Richtung in der Basis (7) verschiebbar ist und mit dem Vorspannelement (18) verbunden ist und
dass ein elastisches Lagerungselement vorgesehen ist, das den Ventilteller mit der Basis (7) verbindet.

2. Schnellschlussventil nach Anspruch 1, **dadurch gekennzeichnet, dass** das elastische Lagerungselement als Blattfeder (16) ausgebildet ist.

3. Schnellschlussventil nach Anspruch 1 oder 2, **dadurch gekennzeichnet, dass** die Antriebsstange (9) ein Gelenk (12) aufweist.

4. Schnellschlussventil nach einem der Ansprüche 1 bis 3, **dadurch gekennzeichnet, dass** ein Faltenbalg (10) an der Basis (7) vorgesehen ist
dass der Faltenbalg (10) sich in axialer Richtung der Antriebsstange (9) erstreckt und
dass die Antriebsstange (9) an dem freien Ende (11) des Faltenbalgs (10) befestigt ist.

5. Schnellschlussventil nach Anspruch 4, **dadurch gekennzeichnet, dass** das Vorspannelement (18) auf der von dem Ventilteller (13) abgewandten Seite der Basis (7) vorgesehen ist.

6. Schnellschlussventil nach einem der Ansprüche 1 bis 5, **dadurch gekennzeichnet, dass** eine Hebeeinrichtung vorgesehen ist, die mit dem von dem Ventilteller (13) abgewandten Ende der Antriebsstange (9) verbunden ist.

7. Schnellschlussventil nach Anspruch 6, **dadurch gekennzeichnet, dass** die Hebeeinrichtung als Druckluftzylinder (25) ausgestaltet ist.

8. Schnellschlussventil nach Anspruch 6 oder 7, **dadurch gekennzeichnet, dass** die Antriebsstange (9) in deren axialer Richtung verschiebbar gegenüber der Hebeeinrichtung ist und
dass der Verschiebehub (x) so bemessen ist, dass die Antriebsstange (9) den Ventilteller (13) von der geöffneten Stellung in die geschlossene Stellung bewegen kann, ohne dass die Hebeeinrichtung bewegt werden muss.

9. Schnellschlussventil nach einem der Ansprüche 1 bis 8, **dadurch gekennzeichnet, dass** ein Verriegelungsvorsprung (19) an der Antriebsstange (9) auf der dem Vakuum abgewandten Seite der Basis (7) vorgesehen ist,
dass eine bewegliche Verriegelungsklinke (21) vorgesehen ist und
dass die bewegliche Verriegelungsklinke (21) derart angeordnet ist, dass sie mit dem Verriegelungsvorsprung (19) in Eingriff gelangen kann, wenn der Ventilteller (13) in der geöffneten Stellung ist.

## Claims

1. Quick-action valve comprising a base (7), a valve seat (4), a valve disc (13) and a biasing member (18), the valve disc (13) being movable between an open position and a closed position, the valve disc (13) contacting the valve seat (4) in the closed position, the biasing member (18) biasing the valve disc (13) into the closed position, and a drive rod (9) being provided at the end of which the valve disc (13) is pivotably connected, **characterised in that** the drive rod (9) can be displaced, in the axial direction thereof, in the base (7) and is connected to the biasing member (18), and **in that** a resilient bearing member which connects the valve disc to the base (7) is provided.

2. Quick-action valve according to claim 1, **characterised in that** the resilient bearing member is formed as a leaf spring (16).

3. Quick-action valve according to either claim 1 or claim 2, **characterised in that** the drive rod (9) has an articulation (12).

4. Quick-action valve according to any one of claims 1 to 3, **characterised in that** a bellows (10) is provided on the base (7), **in that** the bellows (10) extends in the axial direction of the drive rod (9), and **in that** the drive rod (9) is fixed to the free end (11) of the bellows (10).

5. Quick-action valve according to claim 4, **characterised in that** the biasing member (18) is provided on the side of the base (7) remote from the valve disc (13).

6. Quick-action valve according to any one of claims 1 to 5, **characterised in that** a lifting device is provided and is connected to the end of the drive rod (9) remote from the valve disc (13).

7. Quick-action valve according to claim 6, **characterised in that** the lifting device is configured as a pneumatic cylinder (25).

8. Quick-action valve according to either claim 6 or claim 7, **characterised in that** the drive rod (9) is displaceable in the axial direction thereof relative to the lifting device, and **in that** the dimensions of the displacement stroke (x) are such that the drive rod (9) is able to move the valve disc (13) from the open position into the closed position without it being necessary to move the lifting device.

9. Quick-action valve according to any one of claims 1 to 8, **characterised in that** a locking projection (19) is provided on the drive rod (9) on the side of the base (7) remote from the vacuum, **in that** a movable locking catch (21) is provided, and **in that** the movable locking catch (21) is arranged in such a way that it is able to engage with the locking projection (19) when the valve disc (13) is in the open position.

## Revendications

1. Soupape à fermeture rapide qui comprend :
- une base (7),
- un siège de soupape (4),
- une tête de soupape (13) et
- un élément de précontrainte (18)
étant précisé que la tête de soupape (13) peut se déplacer entre une position d'ouverture et une position de fermeture et que dans cette dernière position elle est appliquée sur le siège de soupape (4), que l'élément de précontrainte (18) agit dans le sens amenant la tête de soupape en position de fermeture et qu'il est prévu une tige d'entraînement (9) qui est montée basculante sur l'extrémité de la tête de soupape (13),
cette soupape de fermeture rapide étant **caractérisée en ce que** la tige d'entraînement (9) peut coulisser selon sa direction axiale dans la base (7) en étant reliée à l'élément de précontrainte (18), et qu'il est prévu un élément de palier élastique, qui relie la tête de soupape à la base (7).

2. Soupape à fermeture rapide selon la revendication 1, **caractérisée en ce que** l'élément de palier élastique est constitué par un ressort à lame (16).

3. Soupape à fermeture rapide selon la revendication 1 ou 2, **caractérisée en ce que** la tige d'entraînement (9) présente une articulation (12).

4. Soupape à fermeture rapide selon une des revendications 1 à 3, **caractérisée en ce qu'**un soufflet (10) est prévu sur la base (7) et s'étend selon la direction axiale de la tige d'entraînement (9) qui elle-même est fixée à l'extrémité libre (11) du soufflet (10).

5. Soupape à fermeture rapide selon la revendication 4, **caractérisée en ce que** l'élément de précontrainte (18) est prévu du côté de la base (7) éloigné de la tête de soupape (13).

6. Soupape à fermeture rapide selon une des revendications 1 à 5, **caractérisée en ce qu'**il est prévu un dispositif de levage qui est relié à l'extrémité de la tige d'entraînement (9) éloignée de la tête de soupape (13).

7. Soupape à fermeture rapide selon la revendication 6, **caractérisée en ce que** le dispositif de levage est un vérin pneumatique (25).

8. Soupape à fermeture rapide selon la revendication 6 ou 7, **caractérisée en ce que** la tige d'entraînement (9) peut, selon sa direction axiale, coulisser par rapport au dispositif de levage, et sa course de coulissement (x) est dimensionnée de manière qu'elle peut faire passer la tête de soupape (13) de sa position d'ouverture à sa position de fermeture, sans que le dispositif de levage ait à se déplacer.

9. Soupape à fermeture rapide selon une des revendications 1 à 8, **caractérisée en ce qu'**il est prévu une saillie de verrouillage (19) sur la tige d'entraînement (9), du côté de la base (7) éloignée du vide, ainsi qu'un cliquet de verrouillage (21) mobile, disposé de manière à pouvoir venir en prise avec la saillie de verrouillage (19) quand la tête de soupape (13) est en position d'ouverture.
